# EUROPÄISCHE PATENTANMELDUNG

(11) **EP 1 939 586 A2**
(43) Veröffentlichungstag der Anmeldung: **02.07.2008**
(21) Anmeldenummer: 07121793.9
(22) Anmeldetag: 28.11.2007
(51) Int. Cl.: G01C 15/00

(54) **Laserprojektionsvorrichtung**

(30) Priorität: 29.12.2006 DE 102006061937
(71) Anmelder: ROBERT BOSCH GMBH, 70442 Stuttgart (DE)
(72) Erfinder: Lukas, Heiner, 70197, Stuttgart (DE); Adamczak, Wolfgang, 70597, Stuttgart (DE); Tiede, Steffen, 71083, Herrenberg (DE); Wuensch, Steffen, 71088, Holzgerlingen (DE)

(57) **Zusammenfassung**

Die Erfindung betrifft eine Laserprojektionsvorrichtung (1) mit mindestens einer Lasereinheit (14) zur Projektion mindestens einer Laserlinie und/oder mindestens eines Laserpunkts. Es ist vorgesehen, dass die Lasereinheit (14) integraler Bestandteil eines mobilen Mehrbeinstativs (46) ist.

## Beschreibung

Die Erfindung betrifft eine Laserprojektionsvorrichtung mit mindestens einer Lasereinheit zur Projektion mindestens einer Laserlinie und/oder mindestens eines Laserpunktes.

### Stand der Technik

im Stand der Technik sind Laserprojektionsvorrichtungen bekannt, die, teilweise mit einer Selbstnivelliervorrichtung ausgestattet, dazu dienen, Laserlinien und/oder Laserpunkte zu projizieren, um beispielsweise für Handwerksarbeiten Bezugslinien zu schaffen. Insbesondere zur Projektion exakt horizontaler oder exakt vertikaler Bezugslinien finden derartige Laserprojektionsvorrichtungen Anwendung. Diese Laserprojektionsvorrichtungen werden für die Projektion auf eine geeignete Unterlage gestellt oder auf transportablen Vorrichtungen befestigt. Häufig sind keine geeigneten Aufstell- oder Befestigungsmöglichkeiten vorhanden, so dass ein Stativ verwendet werden muss. Diese Stative müssen bestimmte Eigenschaften aufweisen, um die Laserprojektionsvorrichtung zuverlässig und im Wesentlichen erschütterungsfrei zu tragen. Hierdurch sind sie relativ groß und schwer und unhandlich. Für ihre Aufbewahrung ist zudem ein großer Stauraum erforderlich. Nachteilig ist weiter, dass bei nicht sorgfältiger Ausrichtung des Stativs und bei nicht sorgfältiger Montage der Laserprojektionsvorrichtung auf dem Stativ Fehler hinsichtlich der Projektion auftreten können.

Aufgabe der Erfindung ist daher, eine Laserprojektionsvorrichtung bereitzustellen, die die genannten Nachteile vermeidet.

### Offenbarung der Erfindung

Hierzu wird eine Laserprojektionsvorrichtung mit mindestens einer Lasereinheit zur Projektion mindestens einer Laserlinie und/oder mindestens eines Laserpunktes vorgeschlagen. Hierbei ist vorgesehen, dass die Lasereinheit integraler Bestandteil eines mobilen Mehrbeinstativs ist. Anders als im Stand der Technik ist folglich die Lasereinheit nicht in einem separaten Gehäuse zur Ausbildung der Laserprojektionsvorrichtung untergebracht, die dann auf einem Stativ oder einer anderen geeigneten Abstützfläche angeordnet werden muss. Vielmehr ist die Lasereinheit als integraler Bestandteil (also nicht als separates Bauteil) eines mobilen Mehrbeinstativs vorgesehen. Ein Mehrbeinstativ ist hierbei ein solches, das mehrere Beine aufweist, die durchaus unterschiedlich ausgebildet sein können, beispielsweise kann ein Bein in Form einer Platte und ein zweites als Stützbein für die Platte ausgebildet sein.

In einer weiteren Ausführungsform ist vorgesehen, dass das Mehrbeinstativ mindestens drei Beine aufweist. Durch die Ausbildung mit drei Beinen (wie bereits im Stand der Technik geläufig) ist der Stand des Stativs bestimmt. Drei Beine und damit drei Auflagepunkte ergeben eine bestimmte, definierte Auflage.

In einer weiteren Ausführungsform ist vorgesehen, dass das Mehrbeinstativ einen, insbesondere als Geräteträger ausgebildeten oder einen Geräteträger aufweisenden, Stativkopf aufweist. Das Mehrbeinstativ weist folglich einen Stativkopf auf, dieser Stativkopf kann hierbei in der aus dem Stand der Technik bekannten Art und Weise als Geräteträger ausgebildet sein, es können folglich weitere Geräte (also nicht die Laserprojektionsvorrichtung selbst) an dem Mehrbeinstativ gehalten werden.

In einer weiteren, bevorzugten Ausführungsform ist vorgesehen, dass die Lasereinheit ganz oder abschnittsweise in dem Stativkopf angeordnet ist. Der Stativkopf weist hierzu mindestens eine Strahlaustrittsöffnung zum Austritt des Laserstrahls auf. Unmittelbar mit Aufstellen des Mehrbeinstativs und Ausrichten desselben, wie dies beispielsweise über am Stativkopf angeordnete oder in diesen eingebaute Wasserwaagen oder Libellen geschehen kann, ist die Laserprojektionsvorrichtung einsatzbereit.

In einer weiteren, bevorzugten Ausführungsform ist vorgesehen, dass das Mehrbeinstativ ein Führungsrohr und ein Verschieberohr aufweist, wobei der Stativkopf an dem Verschieberohr angeordnet oder anordenbar ist. Das Verschieberohr ist hierbei, wie aus dem Stand der Technik bekannt, in dem Führungsrohr geführt und erlaubt eine Höhenverstellung des Stativkopfes, der an dem Führungsrohr oberseitig angeordnet oder anordenbar ist. Mit Letzterem ist gemeint, dass der Stativkopf an dem Führungsrohr zwar abtrennbar ausgestaltet sein kann, in der erfindungsgemäßen Art und Weise aber einen integralen Bestandteil des Mehrbeinstativs darstellt. Insbesondere kann hierbei vorgesehen sein, dass das Verschieberohr in dem Führungsrohr umgesteckt werden kann, der Stativkopf folglich einmal oberseitig und einmal unterseitig angeordnet werden kann, und/oder dass der Stativkopf als solcher von dem Führungsrohr getrennt und an der jeweils anderen Seite des Führungsrohres angebracht werden kann. Dies erlaubt eine besonders vielseitige Verwendung der Laserprojektionsvorrichtung (insbesondere in Bezug auf die Höhe der zu projizierenden Laserlinie und/oder des Laserpunktes).

In einer weiteren, bevorzugten Ausführungsform ist vorgesehen, dass das Verschieberohr mehrteilig ausgebildet ist. Die mehrteilige Ausbildung des Verschieberohrs gestattet die Zerlegung und Wiederzusammenfügung des Verschieberohrs; hierbei ist insbesondere möglich, auch sehr bodennahe Positionen der Lasereinheit zu verwirklichen, bei denen ein einteilig ausgebildetes Verschieberohr hinderlich wäre, da es den Verstellbereich des Mehrbeinstativs durch seine Längenausdehnung begrenzt. Gleichzeitig kann durch die mehrteilige Ausbildung eine erhebliche Länge des Verschieberohrs erreicht werden, was einen sehr großen Verstellbereich der Laserprojektionsvorrichtung und damit der Höhe der zu projizierenden Laserlinie und/oder des Laserpunktes bewirkt.

In einer anderen bevorzugten Ausführungsform ist vorgesehen, dass die Lasereinrichtung wenigstens abschnittsweise in dem Verschieberohr angeordnet ist. Insbesondere bei größeren und universelleren Laserprojektionsvorrichtungen, die beispielsweise mehrere Lasereinheiten zur gleichzeitigen Projektion mehrerer Laserlinien und/oder Laserpunkten aufweisen oder bei denen mindestens eine Lasereinheit durch entsprechende Optiken (Strahlteiler, Prismen, Fokussiervorrichtungen et cetera) zur gleichzeitigen Projektion mehrerer Laserlinien und/oder Laserpunkten vorgesehen sind, können dadurch verwirklicht werden, dass als Bauraum wenigstens abschnittsweise auch das Verschieberohr verwendet wird oder das Verschieberohr gleichzeitig dem Strahlengang der Lasereinheit dient, der Laserstrahl folglich durch das Verschieberohr gelenkt oder in diesem umgelenkt wird.

In einer anderen Ausführungsform weist die Laserprojektionsvorrichtung mindestens eine Selbstnivelliervorrichtung auf. Eine Selbstnivelliervorrichtung ist hierbei eine Vorrichtung, die das Nivellieren des Mehrbeinstativs (und hiermit der Laserprojektionsvorrichtung als solcher) über die aus dem Stand der Technik bekannten Wasserwaagen und Libellen überflüssig macht, wobei diese Nivellierung mindestens hinsichtlich einer Ebene/Achse im Raum erfolgt.

In einer bevorzugten Ausführungsform ist vorgesehen, dass die Selbstnivelliervorrichtung zumindest abschnittsweise in dem Verschieberohr angeordnet ist. Diese Anordnung erlaubt eine relativ kleine Bauform des den die Lasereinheit aufweisenden Stativkopfes, da die Bauraum beanspruchende Selbstnivelliervorrichtung zumindest abschnittsweise in dem Verschieberohr angeordnet ist.

In einer anderen Ausführungsform ist die Selbstnivelliervorrichtung ein Pendelsystem oder weist ein Pendelsystem auf. Selbstnivelliervorrichtungen sind insbesondere als Pendelvorrichtungen ausgebildet, bei denen die Lasereinheit respektive die den Laserstrahl projizierende Einheit pendelnd gelagert ist, insbesondere kardanisch pendelnd, und wobei diese über ihre Gewichtskraft respektive die Gewichtskraft eines Pendels mit ihrer Hochachse stets so ausgerichtet werden, dass diese Hochachse zum Erdmittelpunkt zeigt. Beispielsweise kann auch eine Pendelvorrichtung von dem Stativkopf ausgehend in das Verschieberohr hineinragen und dort pendeln. Zwar ist der Einsatzbereich einer solchen Pendelvorrichtung hierbei beschränkt, abhängig von dem Durchmesser des Verschieberohrs und von der Pendellänge, für die üblicherweise auftretenden Schrägstellungen einer Laserprojektionsvorrichtung ist dies im Regelfall aber ausreichend und im Zweifel von einem Bediener ohne weiteres erkenn- und ausgleichbar, insbesondere dann, wenn zusätzlich zur Selbstnivelliervorrichtung zu einer ersten, groben Ausrichtung der Laserprojektionsvorrichtung im Raum Libellen und/oder Wasserwaagen verwendet werden, wie aus dem Stand der Technik bekannt.

In einer anderen Ausführungsform weist die Laserprojektionsvorrichtung mindestens einen Lotlaser auf. Ein Lotlaser ist hierbei ein Laser, der einen Punkt senkrecht nach oben und/oder senkrecht nach unten projiziert, also in Richtung des Lotes ausgehend von dem die Lasereinheit umfassenden Stativkopf. Hierdurch ist es möglich, bei einem nach unten weisenden Lotlaser durch Projektion eines Laserpunktes die Laserprojektionsvorrichtung genau an einem vorgegebenen Punkt aufzustellen (der beispielsweise durch eine vorangegangene Vermessung der Umgebung vorgegeben sein kann). Bei nach oben weisendem Lotlaser ist es möglich, genau über der Laserprojektionsvorrichtung einen Punkt zu bestimmen.

In einer anderen Ausführungsform weist die Selbstnivelliervorrichtung ein Dämpfungssystem auf. Ein Dämpfungssystem bewirkt, dass die Selbstnivelliervorrichtung entsprechend den physikalischen Gesetzen über bedämpfte Schwingungen relativ schnell in eine definierte Ruhelage gebracht wird, und nicht länger pendelt, als dies zur Bestimmung der zutreffenden Nivellierung und Einnahme der Selbstnivellierposition erforderlich ist. Dieses Dämpfungssystem ist vorzugsweise magnetisch ausgebildet; dies bedeutet, dass magnetische Felder, wie sie durch Permanentmagnete oder durch Elektromagnete vorgegeben sein können, die Pendelbewegungen der Selbstnivelliervorrichtung oder eines Teiles derselben bedämpft.

Eine andere Ausführungsform weist eine Arbeitsbereichüberschreitungssignalisierung auf. Die Arbeitsbereichüberschreitungssignalisierung zeigt haptisch, optisch oder akustisch an, dass der Arbeitsbereich der Selbstnivelliervorrichtung überschritten ist. Dies ist insbesondere dann gegeben, wenn das Pendelsystem anschlägt (also seine eingenommene Endlage nicht weiter verändern kann, obwohl dies zur Herstellung eines gewünschten Niveaus erforderlich wäre). Die Signalisierung erfolgt haptisch durch fühlbare Maßnahmen, beispielsweise Durchdringen des Verschieberohrs durch einen Signalstift, der an dem Pendelsystem angeordnet ist, optisch durch sichtbare Signalisierung und/oder akustisch durch eine vom Bediener hörbare Signalisierung. Hierbei sind alle im Stand der Technik bekannten Signalisierungsvorrichtungen denkbar.

Eine weitere Ausführungsform der Erfindung sieht einen gleichberechtigten Betrieb der Laserprojektionsvorrichtung in Standard-Betriebslage und in Überkopf-Betriebslage des Stativkopfs vor. Dies bedeutet, dass der Stativkopf gleichberechtigt auch in einer Überkopf-Betriebslage verwendet werden kann, also insbesondere in einer solchen Art und Weise, dass er entweder an dem unteren (bodennäheren) Ende des Verschieberohrs angebracht wird, oder dass er, ohne dass er vom Verschieberohr gelöst wird, durch Umstecken des Verschieberohrs und Neuanbringen mit dem Stativkopf nach unten (also zwischen den Beinen des Mehrbeinstativs) verwendet wird. Insbesondere bei Verwendung von kardanischen Aufhängungen gerade kleinerer Bauform innerhalb des Stativkopfs 13 ohne Inanspruchnahme weiteren Bauraums für die Selbstnivelliervorrichtung ist ein solcher Betrieb sehr vorteilhaft möglich. Er erlaubt gleichberechtigt zum Betrieb in Standard-Betriebslage (in der sich der Stativkopf oberhalb des Mehrbeinstativs und oberhalb des Führungsrohrs befindet) einen sehr bodennahen Einsatz durch einfaches Umstecken des Verschieberohrs mit dem Stativkopf oder durch Anordnen des Stativkopfs an dem unteren, bodennahen Ende des Verschieberohrs.

In einer anderen bevorzugten Ausführungsform weist der Geräteträger eine 1/4-Zoll- und/oder 3/8-Zoll-Schraubvorrichtung zum Befestigen von Geräten auf, wie dies von im Stand der Technik bekannten Stativen (beispielsweise als Geräteträger etwa in Form der bekannten 3D-Neigeköpfe und für fotografische Zwecke) bekannt ist; dies erlaubt einen universellen Einsatz des Stativs über die reine Laserprojektion hinaus.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand von Figuren näher erläutert.

Es zeigen
- Figur 1: eine Laserprojektionsvorrichtung als Dreibeinstativ;
- Figur 2: einen Stativkopf mit Lasereinheit und Selbstnivelliervorrichtung und
- Figur 3: eine Laserprojektionsvorrichtung als Dreibeinstativ mit Geräteträger und aufgesetzter Kleinbildkamera.

### Ausführungsform(en) der Erfindung

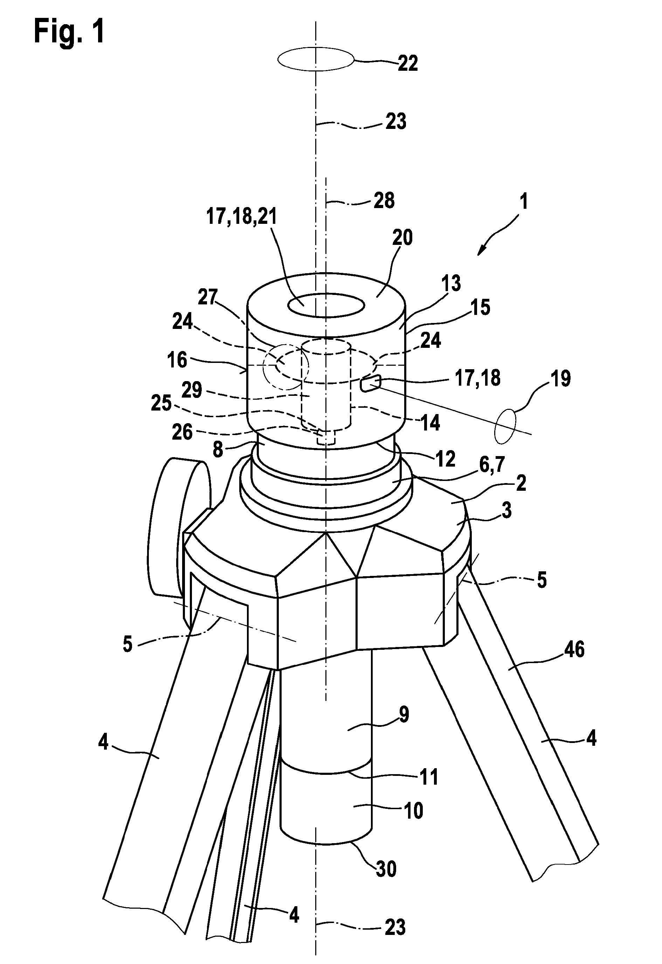

Figur 1 zeigt eine Laserprojektionsvorrichtung 1, die als Mehrbeinstativ 46, nämlich als Dreibeinstativ 2 ausgebildet ist, wobei das Dreibeinstativ 2 aus einem Lagerblock 3 besteht, der drei Stativbeine 4, jeweils um eine Klappachse 5 angelenkt, aufnimmt, wobei die Stativbeine 4 jeweils in einem Winkelabstand von 120° zueinander im Lagerblock 3 angeordnet sind. Solche Dreibeinstative sind aus dem Stand der Technik bekannt. Zentrisch im Lagerblock 3 ist ein Führungsrohr 6 angeordnet, das als Aufnahme 7 für die längsverschiebliche Lagerung und Arretierung eines Verschieberohrs 8 dient. Das Verschieberohr 8 ist zweiteilig ausgebildet, nämlich aus einem Verschieberohr-Oberteil 9 und einem Verschieberohr-Unterteil 10. Verschieberohr-Oberteil 9 und Verschieberohr-Unterteil 10 sind zueinander fluchtend miteinander verbunden, beispielsweise ineinander gesteckt oder verschraubt, es ergibt sich hierdurch zwischen ihm eine Stoßfuge 11. Auf einer Oberseite 12 des Verschieberohr-Oberteils 9 ist fluchtend ein Stativkopf 13 angeordnet, in dem eine Lasereinheit 14 angeordnet ist. Der Stativkopf 13 ist im Wesentlichen als Hohlzylinder 15 ausgebildet. An dessen Zylinderaußenfläche 16 ist eine Ausnehmung 17 als Strahlaustrittsöffnung 18 vorgesehen, die die horizontale Projektion eines Laserstrahls 19 gestattet. Auf einer Zylinderoberseite 20 ist eine weitere Ausnehmung 17 als Strahlaustrittsöffnung 18 angeordnet, wobei diese eine Lotlaseraustrittsöffnung 21 zur Projektion eines Lotlasers 22 darstellt. Der Lotlaser 22 verläuft genau in einer Vertikalachse 23 der Laserprojektionsvorrichtung 1. Die Lasereinheit 14 wird über hier nicht dargestellte elektrische Schalter aktiviert und deaktiviert sowie über eine hier nicht dargestellte Stromversorgung, insbesondere über Batterien, mit Energie versorgt. Optiken oder andere Vorrichtungen, um den Laserstrahl 19 zu einer Horizontal- und/oder Vertikallinie aufzufächern, sind nicht dargestellt. Die Lasereinheit 14 ist innerhalb des Stativkopfes 13 pendelnd gelagert, und zwar mittels einer kardanischen Aufhängung 24 (hier nur schematisch dargestellt). Die Lasereinheit 14 weist an einer Lasereinheitenunterseite 25 ein Gewicht 26, so dass sich in Verbindung mit der kardanischen Aufhängung 24 ein Pendelsystem 27 ergibt. Das Pendelsystem 27 ist innerhalb des Stativkopfes 13 so angeordnet, das es sich in Hinblick auf die Vertikalachse 23 der Laserprojektionsvorrichtung 1 einpendelt, sofern das Dreibeinstativ 2 vollständig nivelliert und entsprechend der Horizontalen und Vertikalen ausgerichtet ist. Hierbei ergibt sich ein ungehinderter Laserdurchtritt der Laserstrahlen 19 beziehungsweise des Lotlasers 22 durch die Ausnehmungen 17. Das Pendelsystem 27 bewirkt innerhalb der durch seine Größe und den innerhalb des Stativkopfes 13 vorgesehenen Bauraum ein automatisches Einpendeln und Selbstnivellieren der Lasereinheit 14 dergestalt, dass deren (hier zur Verdeutlichung übertrieben versetzt dargestellte) Lasereinheiten-Vertikalachse 28 stets durch den Erdmittelpunkt verläuft. Dies bedeutet, dass die Lasereinheit 14 auch dann nivelliert ist, wenn das hinsichtlich des Dreibeinstativs 2 nicht der Fall ist, wenn also die Vertikalachse 23 der Laserprojektionsvorrichtung als solcher und die Lasereinheiten-Vertikalachse 28 nicht miteinander fluchten. Durch dieses Pendelsystem 27 wird eine Selbstnivelliervorrichtung 29 ausgebildet. Diese erleichtert die Handhabung der Laserprojektionsvorrichtung 1 erheblich, da es für den Bediener nicht mehr erforderlich ist, das Dreibeinstativ 2 absolut lotrecht aufzustellen, um einen waagerechten Laserstrahl 19 projizieren zu können, der zuverlässig eine nivellierte Horizontale ergibt. Der Stativkopf 13 kann von dem Verschieberohr-Oberteil 9 abgenommen und an dem Verschieberohr-Unterteil 10 angeordnet werden, wozu das Verschieberohr-Unterteil 10 an seiner Verschieberohr-Unterteil-Unterseite 30 eine hier nicht näher dargestellte Aufnehmung aufweist, die einer an dem Verschieberohr-Oberteil 9 ausgebildeten, ebenfalls nicht dargestellten Stativkopfaufnahme entspricht. Hierdurch wird ermöglicht, dass der Stativkopf 13 gewissermaßen in "Über-Kopf-Stellung" eingesetzt werden kann, wodurch sich sehr bodennahe Laserstrahlen 19 projizieren lassen. Weiter kann das Verschieberohr 8 an der Stoßfuge 11 in das Verschieberohr-Oberteil 9 und das Verschieberohr-Unterteil 10 getrennt werden, so dass auch der Einsatz mit nur einem dieser genannten Teile möglich ist, wodurch sich eine stärkere Abspreizung der Stativbeine 4 und eine unter allen Umständen sichere Aufstellung erreichen lässt, ohne dass die Baulänge des Verschieberohrs 8 bei der Aufstellung störend wäre. Durch Zusammenfügen von Verschieberohr-Oberteil 9 und Verschieberohr-Unterteil 10 hingegen lässt sich die volle Baulänge des Verschieberohrs 8 nutzen, um beispielsweise den Stativkopf 13 und damit die Lasereinheit 14 sehr hoch über dem Lagerblock 3 des Dreibeinstativs 2 ausfahren zu können, um sehr hoch projizierte Laserstrahlen 19 zu erreichen.

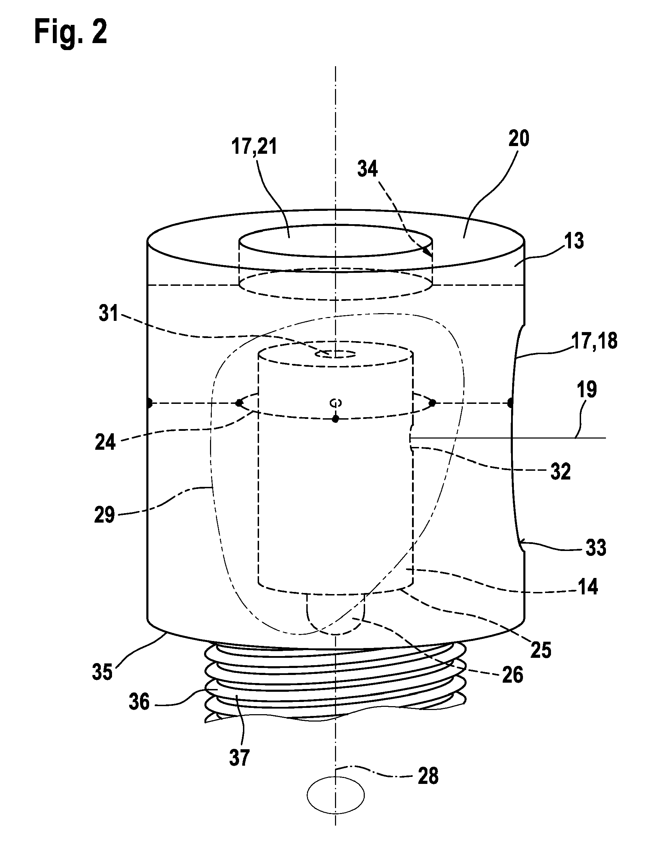

Figur 2 zeigt einen Stativkopf 13 mit einer darin integrierten Lasereinheit 14, die eine Lotlaserstrahlaustrittsöffnung 31 und eine Horizontallaserstrahlaustrittsöffnung 32 aufweist. Die Lasereinheit 14 ist in einer kardanischen Aufhängung 24 pendelnd gelagert. Die Lasereinheit 14 weist ferner ein Gewicht 26 an seiner Lasereinheitenunterseite 25 auf, um die Lasereinheitvertikalachse 28 stets zum Erdmittelspunkt auszurichten. Die kardanische Aufhängung 24 bildet im Zusammenspiel mit der Lasereinheit 14 und dem Gewicht 26 die Selbstnivelliervorrichtung 29 aus. Um den Durchtritt von aus der Horizontallaserstrahlaustrittsöffnung 32 der Lasereinheit 14 austretenden Laserstrahlen 19 durch den Stativkopf 13 zu ermöglichen, weist der Stativkopf 13 die Ausnehmung 17 als Strahlaustrittsöffnung 18 auf. Die Strahlaustrittsöffnung 18 ist relativ zur Horizontallaserstrahlaustrittsöffnung 32 groß, um dem Pendeln der Lasereinheit 14 mit einer entsprechenden Auslenkung des Laserstrahls 19 Rechnung zu tragen, ohne dass der Laserstrahl 19 von einem Strahlaustrittsöffnungsrand 33 behindert oder gar abgeschattet wird. Entsprechendes gilt für die an der Zylinderoberseite 20 des Stativkopfs 13 angeordneten Ausnehmung 17, die als Lotlaseraustrittsöffnung 21 ausgebildet ist. Die Lotlaseraustrittsöffnung 21 ist groß relativ zur Lotlaserstrahlaustrittsöffnung 31, um auch hier dem Lotlaser 22 den ungehinderten Durchtritt zu ermöglichen, auch wenn die Lasereinheit 14 in ihrer kardanischen Aufhängung 24 relativ zum Stativkopf 13 verschwenkt ist. Der Stativkopf 13 weist ferner, vorzugsweise im Bereich der Lotlaseraustrittsöffnung 21, eine Gerätekopfaufnahme 34 auf, in der ein hier nicht näher dargestellter Geräteträger (beispielsweise ein handelsüblicher 3D-Neiger) befestigt werden kann. Weiter weist der Stativkopf 13 an seiner Stativkopfunterseite 35 eine Befestigungsvorrichtung 36 auf, die der Befestigung des Stativkopfes 13 in oder an dem hier nicht dargestellten Verschieberohr 8 (Figur 1) ermöglicht, und die hier als Einschraubgewinde 37 exemplarisch ausgebildet ist. Es kommen hierbei selbstverständlich auch andere Befestigungsvorrichtungen in Betracht, wie sie im Stand der Technik geläufig sind, beispielsweise Klemmvorrichtungen oder Steckvorrichtungen.

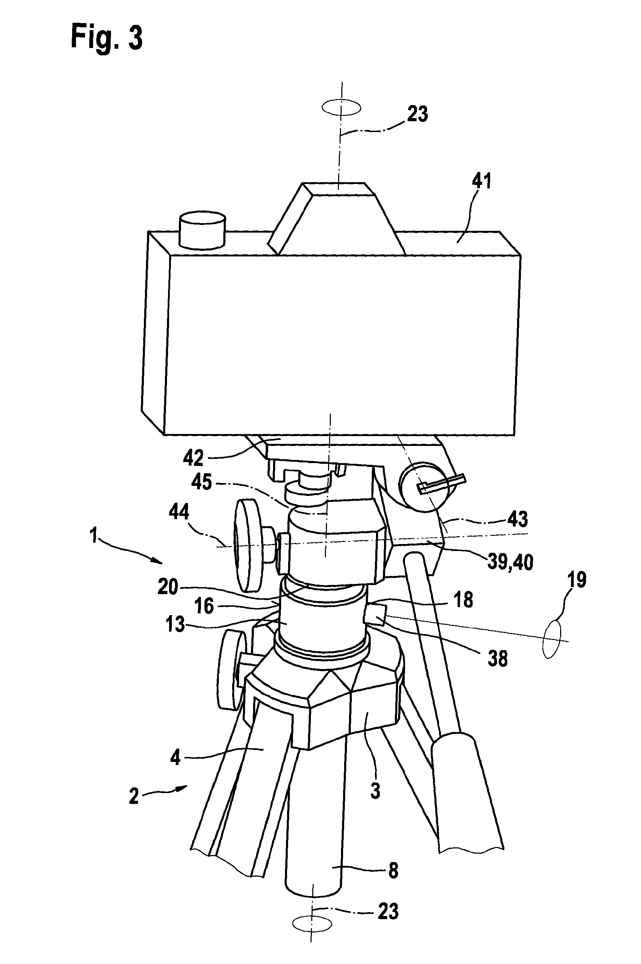

Figur 3 zeigt die Laserprojektionsvorrichtung 1 mit dem Dreibeinstativ 2 und dem auf dem Verschieberohr 8 oberhalb des Lagerblocks 3 angeordneten Stativkopfs 13. Der Stativkopf 13 weist im Bereich der Strahlaustrittsöffnung 18 für den Laserstrahl 19 einen Schutztubus 38 auf, der in Richtung des Laserstrahls 19 senkrecht auf der Zylinderaußenseite 16 des Stativkopfs 13 sitzt. Auf der Zylinderoberseite 20 des Stativkopfs 13 ist ein als 3D-Neiger 39 ausgebildeter Geräteträger 40 angeordnet, der die Aufnahme einer Kamera 41 auf einer Geräteträgerplatte 42 gestattet, wobei die Geräteträgerplatte 42 um eine z-Achse 43, eine x-Achse 44 und um eine y-Achse 45 verschwenkbar ist. Die y-Achse 45 entspricht der Vertikalachse 23 der Laserprojektionsvorrichtung 1.

## Patentansprüche

1. Laserprojektionsvorrichtung mit mindestens einer Lasereinheit zur Projektion mindestens einer Laserlinie und/oder mindestens eines Laserpunkts, **dadurch gekennzeichnet, dass** die Lasereinheit (14) integraler Bestandteil eines mobilen Mehrbeinstativs (46) ist.

2. Laserprojektionsvorrichtung nach Anspruch 1, **dadurch gekennzeichnet, dass** das Mehrbeinstativ (46) mindestens drei Beine aufweist.

3. Laserprojektionsvorrichtung nach einem der vorhergehenden Ansprüche, **dadurch gekennzeichnet, dass** das Mehrbeinstativ (46) einen, insbesondere als Geräteträger (40) ausgebildeten oder einen Geräteträger (40) aufweisenden, Stativkopf (13) aufweist.

4. Laserprojektionsvorrichtung nach einem der vorhergehenden Ansprüche, **dadurch gekennzeichnet, dass** die Lasereinheit (14) ganz oder abschnittsweise in dem Stativkopf (13) angeordnet ist.

5. Laserprojektionsvorrichtung nach einem der vorhergehenden Ansprüche, **dadurch gekennzeichnet, dass** das Mehrbeinstativ (46) ein Führungsrohr (6) und ein Verschieberohr (8) aufweist, wobei der Stativkopf (13) an dem Verschieberohr (8) angeordnet oder anordenbar ist.

6. Laserprojektionsvorrichtung nach einem der vorhergehenden Ansprüche, **dadurch gekennzeichnet, dass** das Verschieberohr (8) mehrteilig ausgebildet ist.

7. Laserprojektionsvorrichtung nach einem der vorhergehenden Ansprüche, **dadurch gekennzeichnet, dass** die Lasereinheit (14) wenigstens abschnittsweise in dem Verschieberohr (8) angeordnet ist.

8. Laserprojektionsvorrichtung nach einem der vorhergehenden Ansprüche, **dadurch gekennzeichnet, dass** die Laserprojektionsvorrichtung (1) mindestens eine Selbstnivelliervorrichtung (29) aufweist.

9. Laserprojektionsvorrichtung nach einem der vorhergehenden Ansprüche, **dadurch gekennzeichnet, dass** die Selbstnivelliervorrichtung (29) zumindest abschnittsweise in dem Verschieberohr (8) angeordnet ist.

10. Laserprojektionsvorrichtung nach einem der vorhergehenden Ansprüche, **dadurch gekennzeichnet, dass** die Selbstnivelliervorrichtung (29) ein Pendelsystem (27) aufweist oder ein Pendelsystem (27) ist.

11. Laserprojektionsvorrichtung nach einem der vorhergehenden Ansprüche, **gekennzeichnet durch** mindestens einen Lotlaser (22).

12. Laserprojektionsvorrichtung nach einem der vorhergehenden Ansprüche, **dadurch gekennzeichnet, dass** die Selbstnivelliervorrichtung (29) ein Dämpfungssystem aufweist.

13. Laserprojektionsvorrichtung nach einem der vorhergehenden Ansprüche, **gekennzeichnet durch** eine Arbeitsbereichüberschreitungssignalisierung.

14. Laserprojektionsvorrichtung nach einem der vorhergehenden Ansprüche, **gekennzeichnet durch** einen gleichberechtigten Betrieb der Laserprojektionsvorrichtung (1) in Standard-Betriebslage und in Überkopf-Betriebslage des Stativkopfs (13).

15. Laserprojektionsvorrichtung nach einem der vorhergehenden Ansprüche, **dadurch gekennzeichnet, dass** der Geräteträger (40) eine 1/4-Zoll-und/oder 3/8-Zoll-Schraubvorrichtung zum Befestigen von Geräten aufweist.
